# EUROPÄISCHE PATENTANMELDUNG

(11) **EP 4 782 730 A1**
(43) Veröffentlichungstag der Anmeldung: **29.07.2026**
(21) Anmeldenummer: 25220243.7
(22) Anmeldetag: 02.12.2025
(51) Int. Cl.: F16K 7/12

(54) **VENTILMEMBRAN MIT WELLENKONTUR, MEMBRANVENTIL UND VERFAHREN**

(30) Priorität: 22.01.2025 DE 102025102145
(71) Anmelder: GEMÜ Gebr. Müller Apparatebau GmbH & Co. Kommanditgesellschaft, 74653 Ingelfingen (DE)
(72) Erfinder: Klemt, Michael, 74629 Pfedelbach (DE); Meinikheim, Steffen, 74653 Ingelfingen (DE)
(74) Vertreter: DREISS Patentanwälte PartG mbB

(57) **Zusammenfassung**

Die Erfindung betrifft eine Ventilmembran für ein Membranventil, die Ventilmembran umfassend einen einer gedachte Lotebene einer Stellachse (16) folgenden Verspannabschnitt (12), und einen vom Verspannabschnitt (12) umgebenden Funktionsabschnitt (18) mit einer Trockenseite (28) und einer Nassseite; wobei der Funktionsabschnitt (18) an der Trockenseite (28) einen Kontaktbereich (36) zum Kontaktieren eines antriebsseitigen Druckstücks aufweist, wobei der Funktionsabschnitt (18) eine Wellenkontur (30) mit wenigstens einem um die Stellachse (16) zumindest abschnittsweise umlaufenden, insbesondere vollständig umlaufenden, Wellenberg (32) und/oder mit wenigstens einem um die Stellachse (16) zumindest abschnittsweise umlaufenden, insbesondere vollständig umlaufenden, Wellental umfasst, und wobei der wenigstens eine Wellenberg (32) und/oder das wenigstens eine Wellental durch den Kontaktbereich (36) verläuft.

## Beschreibung

Die Erfindung betrifft eine Ventilmembran, ein Membranventil sowie ein Verfahren zum Betreiben eines Membranventils.

Aus der US 30 11 758 A ist eine Ventilmembran mit einer Wellenkontur an der Trockenseite bekannt, wobei die Wellenkontur nur außerhalb des Kontaktbereichs angeordnet.

Der Erfindung liegt die Aufgabe zugrunde, eine langlebige Ventilmembran mit einer optimierten Walkbewegung bereitzustellen.

Die zugrundeliegende Aufgabe wird gelöst durch eine Ventilmembran mit den Merkmalen des Anspruchs 1. Die Ventilmembran ist für ein Membranventil ausgebildet, die Ventilmembran umfassend: einen einer gedachte Lotebene einer Stellachse folgenden Verspannabschnitt, einen vom Verspannabschnitt umgebenden Funktionsabschnitt mit einer Trockenseite und einer Nassseite; wobei der Funktionsabschnitt an der Trockenseite einen Kontaktbereich zum Kontaktieren eines antriebsseitigen Druckstücks aufweist, wobei der Funktionsabschnitt eine Wellenkontur mit wenigstens einem um die Stellachse zumindest abschnittsweise, insbesondere vollständig, umlaufenden Wellenberg und/oder mit wenigstens einem um die Stellachse zumindest abschnittsweise, insbesondere vollständig, umlaufenden Wellental umfasst, und wobei der wenigstens eine Wellenberg und/oder das wenigstens eine Wellental durch den Kontaktbereich verläuft.

Im Sinne der Erfindung ist unter dem Kontaktbereich der Bereich der Ventilmembran zu verstehen, in welchem die Kontaktierung zwischen der Ventilmembran und einem antriebsseitigen Druckstück erfolgt. In der US 30 11 758 A ist der Kontaktbereich von der Wellenkontur ausgeschlossen.

Im Sinne der Erfindung ist unter einer Wellenkontur eine spezifische Struktur oder Formgebung zu verstehen, die wellenartige oder periodische Erhebungen und Vertiefungen entlang einer Oberfläche, in dem Fall entlang der Trockenseite des Membranventils, aufweist. Die Wellenkontur kann durch ein Hinzufügen und/oder Entfernen von Material an der Trockenseite erzeugt werden. Die Wellenkontur kann als eine sinusförmige Wellenkontur, rechteckige Wellenkontur (Rechteckprofil), eine dreieckige Wellenkontur (Sägezahnprofil), eine trapezförmige Wellenkontur, eine parabolische Wellenkontur, eine asymmetrische Wellenkontur oder eine aus zwei oder mehreren der vorgenannten kombinierten Wellenkontur ausgebildet sein.

Wenn nicht anders angegeben, gelten die geometrischen Beschreibungen der Ventilmembran im ungespannten Zustand. Im Sinne der Erfindung ist unter dem ungespannten Zustand der Zustand der Ventilmembran zu verstehen, in welchem sich die Ventilmembran nach dem Herstellungsprozess und vor dem Einbau in das Membranventil befindet. Der ungespannte Zustand ist von dem Öffnungs- und Schließzustand der Ventilmembran zu unterscheiden, in welchem jeweils die Ventilmembran zwischen zwei Gehäuseteilen des Membranventils eingespannt ist.

Aufgrund der Ausbildung der Wellenkontur im Kontaktbereich der Ventilmembran können gezielt, lokale Spannungen in die Ventilmembran eingebracht oder kritische Zonen kompensiert werden. Diese lokalen Spannungen sind vorteilhaft, um die Walkbewegung zu unterstützen und gezielt einzustellen sowie die Spannung in Summe und/oder die Spannungsspitzen, insbesondere am Übergang zwischen Walkabschnitt und Domabschnitt und/oder am Übergang zwischen Walkabschnitt und Verspannabschnitt, zu verringern. Damit geht eine verminderte Rissempfindlichkeit/-neigung einher.

Die Wellenkontur ermöglicht ein geführtes Abrollverhalten, sodass ein geringer Walkwiderstand vorliegt, sowie eine geführte Schließbewegung, sodass weniger Faltenbildung beim Schließen, also beim Verlagern der Ventilmembran in eine Schließposition, auftritt. Ferner wirkt sich die Wellenkontur positiv auf das Dämpfungsverhalten und die Druckbeständigkeit der Ventilmembran beim Schließen aus. Die vorteilhafte Ausgestaltung der Ventilmembran ermöglicht eine höhere Gestaltungsfreiheit der angrenzenden Bauteile eines Membranventils.

Die Wellenkontur bewirkt eine oder mehrere ringförmige Kontaktierungen zwischen dem Druckstück und der Ventilmembran. Demnach kann die Reibung zwischen dem Druckstück und der Ventilmembran reduziert werden. Dies ist besonders vorteilhaft, für Ventilmembran mit geringen Shore-Härten, mit hoher Oberflächenreibung oder bei hoher Temperatur.

Die Ventilmembran ist vorzugsweise aus einem Elastomer oder einem elastomerähnlichen Material hergestellt.

Ein vorteilhafter Aspekt der Beschreibung sieht vor, dass die Wellenkontur wenigstens zwei oder drei um die Stellachse zumindest abschnittsweise, insbesondere vollständig, umlaufende Wellenberge und/oder wenigstens zwei oder drei um die Stellachse zumindest abschnittsweise, insbesondere vollständig, umlaufende Wellentäler aufweist.

Ein vorteilhafter Aspekt der Beschreibung sieht vor, dass der Funktionsabschnitt einen Walkabschnitt aufweist. Zudem kann der Funktionsabschnitt einen vom Walkabschnitt umgebenen Domabschnitt mit einem abschnittsweise darin angeordneten Membranpin aufweisen. Die Wellenkontur ist vorzugsweise im Walkabschnitt vorgesehen. Der Domabschnitt erstreckt sich vorzugsweise parallel zur Stellachse. Der Walkabschnitt ist vorzugsweise radial außen zum Domabschnitt angeordnet.

Ein vorteilhafter Aspekt der Beschreibung sieht vor, dass an den Domabschnitt ein Wellenberg oder ein Wellental der Wellenkontur angrenzt. Demnach ist eine optimale Krafteinbringung von dem Druckstück auf die Ventilmembran im Bereich des Domabschnitts sichergestellt. Eine Rissbildung am Domabschnitt kann somit entgegengewirkt werden. Dies wirkt sich besonders positiv im Übergangsbereich des Kontaktbereichs zum Domabschnitt auf.

Ein vorteilhafter Aspekt der Beschreibung sieht vor, dass an den Verspannabschnitt ein Wellental oder ein Wellenberg der Wellenkontur angrenzt. Demnach ist eine optimale Krafteinbringung von dem Druckstück auf die Ventilmembran im Bereich des Verspannabschnitts und/oder des Dichtstegs sichergestellt. Eine Rissbildung am Verspannabschnitt und/oder am Dichtsteg kann somit entgegengewirkt werden. Dies wirkt sich besonders positiv im Übergangsbereich des Kontaktbereichs zum Verspannabschnitt auf.

In einer bevorzugten Ausführungsform weist die Ventilmembran eine Wellenkontur mit drei Wellenbergen und drei Wellentälern auf, wobei der erste Wellenberg und das erste Wellental im Bereich des Domabschnitts, daran anschließend ein zweiter Wellenberg und ein zweites Wellental sowie im Bereich des Verspannabschnitts ein dritter Wellenberg und ein drittes Wellental vorgesehen. Der erste Wellenberg und das erste Wellental werden entlang der Trockenseite vorzugsweise vom zweiten Wellenberg und vom zweiten Wellental umschlossen. Der zweite Wellenberg und das zweite Wellental werden entlang der Trockenseite vorzugsweise vom dritten Wellenberg und vom dritten Wellental umschlossen. Demnach weisen der dritte Wellenberg und das dritte Wellental einen größeren Durchmesser als der zweite Wellenberg und das zweite Wellental sowie als der erste Wellenberg und das erste Wellental auf.

Ein vorteilhafter Aspekt der Beschreibung sieht vor, dass mehrere Wellenberge und/oder mehrere Wellentäler vorgesehen sind, wobei jeder Wellenberg eine Wellenhöhe und/oder jedes Wellental eine Wellentiefe aufweist. Die Wellenhöhen der Wellenberge und/oder die Wellentiefen der Wellentäler können unterschiedlich ausgebildet sein. Dies können insbesondere von der Stellachse zum Verspannabschnitt hin zu- und/oder abnehmen. Es ist alternativ oder zusätzlich denkbar, dass bei mehr als drei Wellenbergen die Abstände zwischen zwei benachbarten Wellenbergen unterschiedlich ausgebildet sind und/oder dass bei mehr als drei Wellentälern die Abstände zwischen zwei benachbarten Wellentälern unterschiedlich ausgebildet sind. Demnach kann die Krafteinbringung weiter optimiert werden.

Ein vorteilhafter Aspekt der Beschreibung sieht vor, dass der wenigstens eine Wellenberg und/oder das wenigstens eine Wellental kreisrund oder ellipsenförmig ausgebildet ist. Der wenigstens eine Wellenberg und/oder das wenigstens eine Wellental ist vorzugsweise konzentrisch zur Stellachse angeordnet.

Ein vorteilhafter Aspekt der Beschreibung sieht vor, dass der wenigstens eine Wellenberg eine Kontaktfläche zum Kontaktieren des antriebsseitigen Druckstücks bildet. Demnach stellt der Wellenberg im Kontaktbereich den höchsten Punkt dar, sodass das Druckstück beim Zustellen die durch die Wellenberge bereitgestellte Kontaktfläche kontaktiert und dort die Kraft auf die Ventilmembran einbringt.

Ein vorteilhafter Aspekt der Beschreibung sieht vor, dass der Kontaktbereich sich zwischen dem Dombereich und dem Verspannabschnitt erstreckt. Demnach kontaktiert das Druckstück die Ventilmembran abschnittsweise über die radiale Erstreckung der Ventilmembran zwischen dem Domabschnitt und dem Verspannabschnitt. Es ist vorteilhaft, wenn die Wellenberge gleichmäßig entlang dieser radialen Erstreckung verteilt sind.

Ein vorteilhafter Aspekt der Beschreibung sieht vor, dass der Kontaktbereich parallel zu einem an der Nassseite vorgesehenen Dichtabschnitt, insbesondere hervorstehenden Dichtsteg, der Ventilmembran verläuft. Demnach kann der Dichtabschnitt besonders zuverlässig gegen einen Ventilsitz beaufschlagt werden. Eine Wellenkontur ist besonders dann vorteilhaft, wenn an der Nassseite ein gegenüber den umliegenden Bereichen ein hervorstehender Dichtabschnitt, insbesondere Dichtsteg, vorgesehen ist, welche die Membrandicke lokal erhöht. Die lokale Materialanhäufung kann sich negativ auf die Walkbewegung und die Langlebigkeit der Ventilmembran auswirken, welche durch die Wellenkontur an der Trockenseite kompensierbar ist.

Ein vorteilhafter Aspekt der Beschreibung sieht vor, dass der Verspannabschnitt eine parallel zur Stellachse verlaufende Verspanndicke aufweist und der Funktionsabschnitt eine quer zur Stellachse verlaufende Funktionsdicke aufweist, wobei die Funktionsdicke an wenigstens einem Wellenberg größer als die Verspanndicke ist und/oder wobei die Funktionsdicke an wenigstens einem Wellental kleiner als die Verspanndicke ist. Demnach sind die Wellenberge als Aufsatz und die Wellentäler als Ausnehmungen an der Trockenseite anzusehen, welche gegenüber der natürlichen Kontur der Trockenseite hervor- bzw. zurückstehen. Folglich ist die Ventilmembran mit der Wellenkontur besonders einfach zu fertigen.

Die der Erfindung zugrundeliegende Aufgabe wird ebenfalls gelöst durch ein Membranventil mit den Merkmalen des Anspruchs 12. Die Erfindung ist gerichtet auf ein Membranventil mit einer zuvor beschriebenen Ventilmembran, das Membranventil umfassend: ein Ventilkörper zum Aufnehmen der Ventilmembran; ein Druckstück zum Verlagern der Ventilmembran, wobei das Druckstück und die Ventilmembran derart angeordnet sind, dass das Druckstück beim Kontaktieren der Ventilmembran den Kontaktbereich, insbesondere den wenigstens einen Wellenberg der Wellenkontur, kontaktiert und/oder komprimiert.

Der Ventilkörper weist vorzugsweise eine Öffnung auf, die zu einem feststehenden Ventilsitz, der zwei Fluidkammern voneinander trennt, führt und von der Ventilmembran verschlossen ist. Die Fluidkammern führen vorzugsweise zu einem jeweils zugeordneten Fluidanschluss des Ventilkörpers. Die Ventilmembran, insbesondere der Verspannabschnitt, ist vorzugsweise zwischen dem Ventilkörper und einem antriebseitigen Antriebskörper verspannt und dichtet das Membranventil nach außen ab. Der Antriebskörper stützt sich vorzugsweise am Ventilkörper ab. Ein Antrieb ist vorzugsweise mit dem Antriebskörper starr verbunden und bewegt eine Ventilstange entlang der Stellachse. Das Drückstück ist vorzugsweise, insbesondere beweglich, mit der Ventilstange verbunden und bewegt das Druckstück in Richtung des Ventilkörpers, um die Ventilmembran auf den feststehenden Ventilsitz zu drücken und damit die Dichtheit innen herzustellen.

Ein vorteilhafter Aspekt der Beschreibung sieht vor, dass mehrere Wellenberge vorgesehen sind. Das Druckstück und die Ventilmembran sind vorzugsweise derart angeordnet, dass beim Zustellen das Druckstück den Kontakt zu den Wellenbergen in Bezug zur Stellachse von radial innen nach radial außen nacheinander herstellt und/oder dass beim Zustellen das Druckstück die Wellenberge in Bezug zur Stellachse von radial innen nach radial außen nacheinander komprimiert. Demnach stellt das Druckstück zunächst den Kontakt zum inneren ersten Wellenberg, dann zum mittleren zweiten Wellenberg und dann zum äußeren dritten Wellenberg her. Aufgrund der sequentiellen Kontaktaufnahme wird auch sequentiell die Kraft in die Ventilmembran eingebracht. Aufgrund der zunehmenden Krafteinbringung von radial innen nach radial außen wird die Walkbewegung weiter begünstigt, sodass ein langlebiges Membranventil bereitgestellt wird.

Die Aufgabe wird ebenfalls gelöst durch ein Verfahren mit den Merkmalen des Anspruchs 14. Das Verfahren dient zum Betreiben eines, insbesondere zuvor beschriebenen, Membranventils mit einer, insbesondere zuvor beschriebenen, Ventilmembran, wobei beim Zustellen des Druckstücks das Drückstück zunächst einen ersten Wellenberg und dann wenigstens einen zweiten Wellenberg der Wellenkontur kontaktiert und/oder komprimiert, wobei der erste Wellenberg in Bezug zur Stellachse radial innen zum wenigstens einen zweiten Wellenberg angeordnet ist. Demnach ist eine optimale Krafteinbringung in die Ventilmembran sichergestellt. Eine derartige gezielte Spannungsverteilung bewirkt eine verringerte Rissbildung am Domabschnitt und/oder am Verspannabschnitt und/oder am Dichtabschnitt, insbesondere Dichtsteg.

Vorzugsweise wird beim Kontaktieren die Wellenkontur mittels des Druckstücks verformt, insbesondere abgeflacht. Dabei kann das Material der Wellenberge in die Ausnehmungen der Wellentäler gedrängt werden.

Mit zunehmenden Verschleiß wird die Rückstellwirkung der Wellenberge und/oder Wellentäler verringert, sodass auch nach Abheben des Druckstücks die Wellenkontur in einem abgeflachten Zustand verbleibt.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1A-C: verschiedene Perspektiven einer Ventilmembran mit einer Wellenkontur auf der Trockenseite;
- Fig. 2: eine perspektivische Ansicht einer Wellenkontur gemäß einer ersten Ausführungsform;
- Fig. 3: eine perspektivische Ansicht einer Wellenkontur gemäß einer zweiten Ausführungsform;
- Fig. 4: eine Schnittansicht einer Ventilmembran mit einer Wellenkontur auf der Trockenseite; und
- Fig. 5: eine hälftige Schnitt- und Seitenansicht eines Membranventils mit einer eine Wellenkontur umfassenden Ventilmembran.

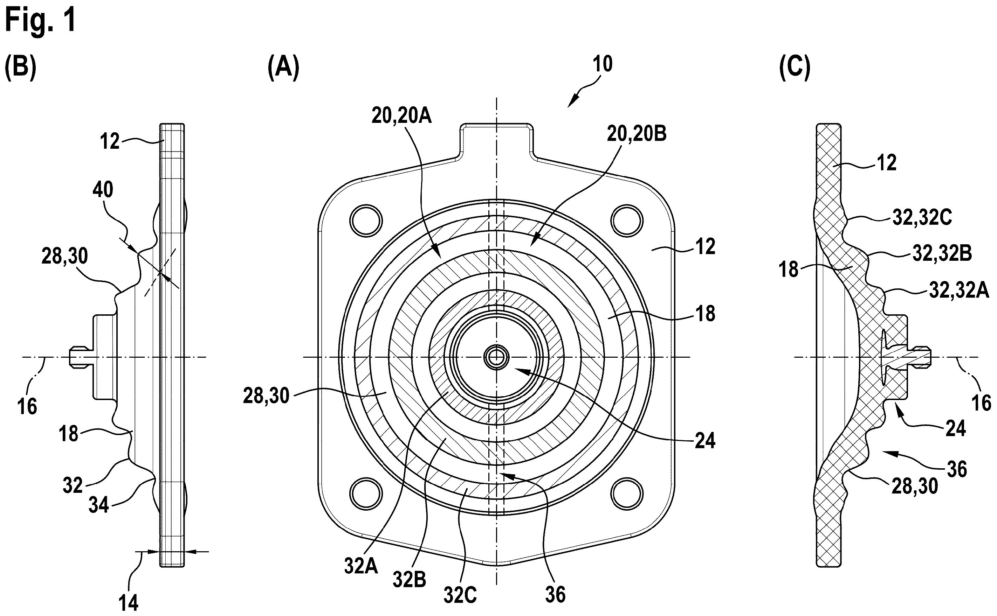

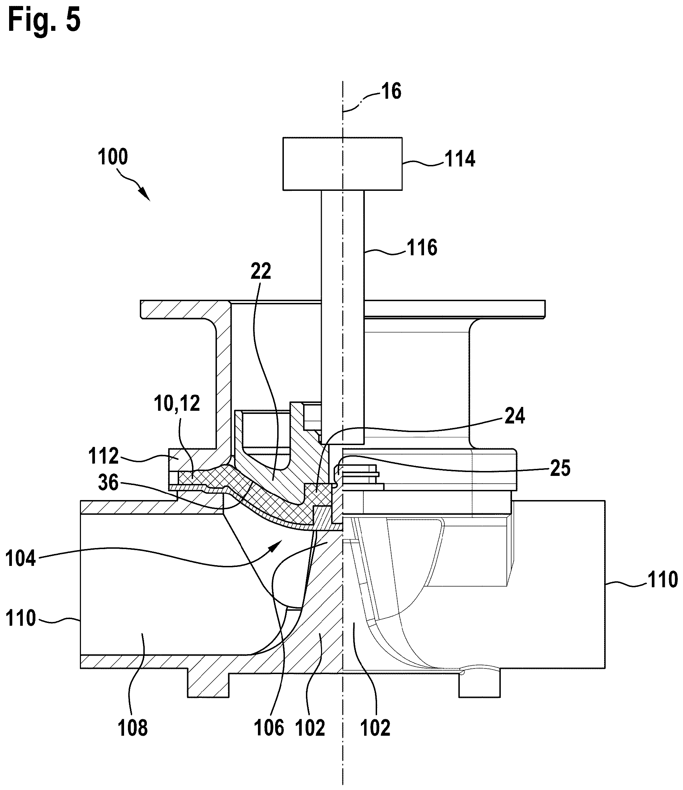

Die Ventilmembran 10 gemäß Fig. 1 ist zur Verwendung in einem Membranventil 100 gemäß Fig. 5 geeignet. Die Ventilmembran 10 weist mehrere funktionale Bereich auf.

Die Ventilmembran 10 weist einen Verspannabschnitt 12 auf, welcher einer gedachte Lotebene einer Stellachse 16 folgt. Der Verspannabschnitt 12 umgibt einen Funktionsabschnitt 18, welcher im Wesentlichen kreisförmig ausgebildet ist. Der Verspannabschnitt 12 dient zum Festsetzen der Ventilmembran 10 am Membranventil und wird insbesondere zwischen einem Gehäuseteil des Membranventils und einem Gehäuseteil des Antriebssystems verspannt. Demnach wird der Verspannabschnitt 12 im Betrieb des Membranventils statisch belastet.

Der Verspannabschnitt 12 muss sicher verspannt werden. Daher ist es in diesem Bereich von besonderer Bedeutung, dass der Verspannabschnitt 12 parallel zur Stellachse 16 eine gleichbleibende Verspanndicke 14 aufweist. So kann mit konstanten Verspannbedingungen die Ventilmembran 10 sicher festgesetzt werden. Jedoch kommt es beim Material mit der Belastungszeit zu einer Druckverformung, welche in dem Fall gering sein sollte.

Der Funktionsabschnitt 18 weist zwei Walkabschnitte 20, insbesondere einen ersten Walkabschnitt 20A und einen zweiten Walkabschnitt 20B, auf. Die Walkabschnitte 20 werden von einem stegförmigen Dichtabschnitt, insbesondere Dichtsteg, voneinander getrennt. Die Ventilmembran 10 wird im Bereich des Funktionsabschnitts 18 entlang der Stellachse 16 zwischen einer Öffnungsstellung und einer Schließstellung verlagert. In der Schließstellung kommt der Dichtabschnitt zur Anlage an einen Ventilsitz und dichtet eine Durchgangsleitung eines Membranventils ab. In der Öffnungsstellung wird die Durchgangsleitung freigegeben. In Fig. 1 ist die Ventilmembran 10 in der zur Öffnungsstellung korrespondierenden Einstellung dargestellt. Zur Verlagerung des Funktionsabschnitts 18 ist der Funktionsabschnitt 18 mit einer Antriebsstange und einem daran angeordneten Druckstück 22 an einem Domabschnitt 24 der Ventilmembran 10 verbunden.

Bei der Bewegung der Ventilmembran 10 vollziehen die Walkabschnitte 20 eine Walkbewegung. Demnach ist der Funktionsabschnitt 18, insbesondere der Dichtabschnitt und/oder die Walkabschnitte 20, einer dynamischen Belastung im Betrieb des Membranventils ausgesetzt. Zudem unterscheiden sich auch die dynamischen Belastungen zwischen dem Dichtabschnitt und den Walkabschnitten 20.

Der Dichtabschnitt wird wiederholt auf den Ventilsitz gepresst, sodass es zu einer Druckbeanspruchung am Dichtabschnitt kommt. Der Dichtabschnitt muss eine Elastizität aufweisen, sodass er über den gesamten Ventilsitz zur Anlage kommt und so eine sichere Abdichtung gewährleistet. Allerdings sollte die Elastizität auch derart eingestellt sein, dass der Dichtabschnitt formstabil ist, sodass das Material nicht übermäßig lotrecht zu einer Längserstreckung des Dichtabschnitts verformt bzw. verdrängt wird.

Die Walkabschnitte 20 erfahren beim Walken gleichzeitig Druck- und Zugbeanspruchungen, sodass auch diese eine entsprechende Elastizität aufweisen müssen. Jedoch muss zudem sichergestellt sein, dass diese nicht brechen oder reißen.

Demnach weist die Ventilmembran 10 unterschiedliche Bereiche auf, welche unterschiedlichen Belastungen ausgesetzt sind und daher diametrale Anforderungen an das Material stellen.

Das Verhalten der Ventilmembran 10 beim Walken hat einen wesentlichen Einfluss auf die Langlebigkeit der Ventilmembran 10 und des Membranventils 100. Es kann aufgrund von lokalen Spannungsspitzen, insbesondere im Übergang zwischen dem Funktionsabschnitt 18 und einem an der Stellachse 16 angeordneten Domabschnitt 24 der Ventilmembran 10, an welchem die Ventilstange 116 angeordnet ist, sowie im Übergang zwischen dem Funktionsabschnitt 18 und dem Verspannabschnitt 12, zu Rissausbildungen kommen. Zur Verbindung der Ventilmembran 10 mit der Ventilstange 116 ist im Domabschnitt 24 ein Membranpin 25 angeordnet.

Die Ventilmembran 10, insbesondere der Funktionsabschnitt 18, weist eine der Durchgangsleitung zugewandte Nassseite 26 und eine der Nassseite 26 gegenüberliegende Trockenseite 28 auf. An der Trockenseite 28 ist eine Wellenkontur 30 mit wenigstens einer, insbesondere drei, Wellenbergen 32 und mit wenigstens einer, insbesondere drei, Wellentälern 34 vorgesehen. Der wenigstens eine Wellenberg 32 und das wenigstens eine Wellental 34 verlaufen vollständig um die Stellachse 16 herum, umfassen also einen Winkel von 360°.

Die Ventilmembran 10 weist an der Trockenseite 28 einen Kontaktbereich 36 zum Kontaktieren des Druckstücks 22 auf. Der Kontaktbereich 36 erstreckt sich an der Trockenseite 28 parallel zum an der Nassseite 26 angeordneten Dichtabschnitt. Im eingebauten Zustand erstrecken sich der Kontaktbereich 36 und/oder das Druckstück 22 und/oder der Dichtabschnitt parallel zum Ventilsitz des Membranventils.

Die Wellenkontur 30 ist derart ausgebildet, dass der wenigstens eine Wellenberg 32 und/oder das wenigstens eine Wellental 34 durch den Kontaktbereich 36 hindurchverläuft. Dabei bilden die Hochpunkte des wenigstens Wellenbergs 32 eine Kontaktfläche, welche beim Zustellen des Druckstücks 22 von dem Druckstück 22 kontaktiert werden.

Aufgrund der Wellenkontur 30, insbesondere dessen Anordnung im Kontaktbereich 36, können gezielt lokale Spannungen in die Ventilmembran 10, vorzugsweise zwischen den Übergängen vom Funktionsabschnitt 18 zum Domabschnitt 24 und/oder Verspannabschnitt 12, eingebracht werden. Beim Zustellen bilden sich ringförmige Kontaktzonen zwischen dem Druckstück 22 und der Ventilmembran 10 aus. Damit kann den Spannungsspitzen und der Rissausbildung in den Randzonen des Funktionsabschnitts 18 entgegengewirkt werden. Ferner wird die Reibung zwischen dem Druckstück 22 und der Ventilmembran 10 verringert.

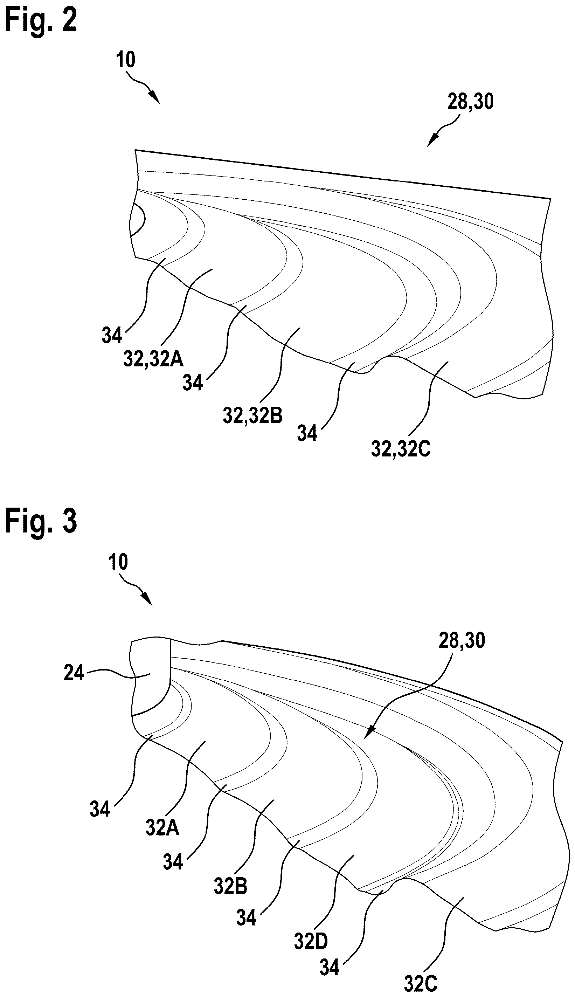

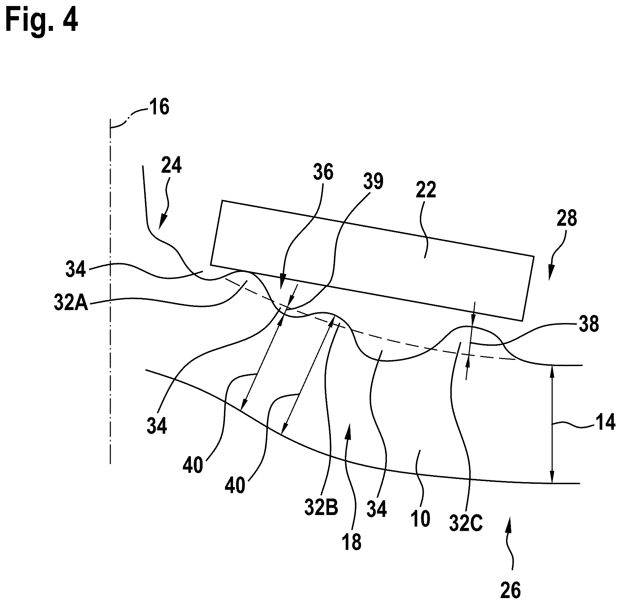

Durch die Ausbildung der Wellenkontur 30, insbesondere der Wellenberge 32 und der Wellentäler 34, kann die Walkbewegung zusätzlich gezielt eingestellt und unterstützt werden. In den Ausführungsformen gemäß Fig. 1 bis 4 weisen die Wellenkonturen 30 drei Wellenberge 32 und drei Wellentäler 34 auf, wobei ein erster Wellenberg 32A dem Domabschnitt 24 zugeordnet, wobei ein dritter Wellenberg 32C dem Verspannabschnitt 12 zugeordnet ist, und wobei ein zweiter Wellenberg 32B zwischen dem ersten Wellenberg 32A und dem zweiten Wellenberg 32B angeordnet ist. In Fig. 1B-C sind die Wellenberg 32 derart ausgebildet, dass der erste Wellenberg 32A höher als der zweite Wellenberg 32B und der zweite Wellenberg 32B höher als der dritte Wellenberg 32C angeordnet ist. In Fig. 2 bis 4 ist der erste Wellenberg 32A höher als der zweite Wellenberg 32B und dritte Wellenberg 32C angeordnet, wobei der dritte Wellenberg 32C höher als der zweite Wellenberg 32B angeordnet ist. Demnach kommt bei einem senkrecht zur Stellachse 16 ausgerichteten Druckstück 22 in Fig. 1 beim Zustellen zunächst der erste Wellenberg 32A, dann der zweite Wellenberg 32B und dann der dritte Wellenberg 32C mit dem Druckstück 22 in Eingriff. In den Fig. 2 bis 4 kommt zunächst der erste Wellenberg 32A, dann der dritte Wellenberg 32C und dann der zweite Wellenberg 32B mit dem Druckstück 22 in Eingriff. Je nach Krafteinleitung in die Ventilmembran 10 werden unterschiedliche Spannungen an unterschiedlichen Orten des Funktionsabschnitts 18 eingebracht. Die Wellenkontur 30 der Fig. 3 unterscheidet sich von der Wellenkontur 30 der Fig. 2 und 4 dadurch, dass ein vierter Wellenberg 32D zwischen dem zweiten Wellenberg 32B und dem dritten Wellenberg 32C vorgesehen ist. Demnach können in einer dichteren Anordnung die Spannungen in die Ventilmembran 10 eingebracht werden.

Gemäß Fig. 4 ist das Druckstück 22 nicht horizontal, sondern nach radial außen abfallend angeordnet. Das Druckstück 22 und die Wellenkontur 30 sind derart ausgebildet, dass das Druckstück 22 zunächst den ersten Wellenberg 32A und dann den dritten Wellenberg 32C kontaktiert. In Fig. 4 ist der Zustand gezeigt, bei welchem das Druckstück 22 den ersten Wellenberg 32A berührt und noch zum zweiten Wellenberg 32B und zum dritten Wellenberg 32C beabstandet ist. In diesem Zustand bildet sich zwischen der Ventilmembran 10 und dem Druckstück 22 ein dreieckförmiger Hohlraum der vom Verspannabschnitt 12 zugänglich ist.

Die Wellenberge 32 weisen eine Wellenhöhe 38 und die Wellentäler 34 eine Wellentiefe 38 auf. Gemäß Fig. 1C ist die Wellenhöhe 38 des zweiten Wellenbergs 32B größer als Wellenhöhe 38 des ersten Wellenbergs 32A und/oder des dritten Wellenbergs 32C. Gemäß Fig. 4 ist die Wellenhöhe 38 des dritten Wellenbergs 32C größer als die Wellenhöhe 38 des ersten Wellenbergs 32A und/oder des zweiten Wellenbergs 32B ausgebildet. Die Wellenhöhe 38 des ersten Wellenbergs 32A und des zweiten Wellenbergs 32B und/oder des vierten Wellenbergs 32D können gemäß Fig. 3 identisch ausgebildet sein. Entsprechendes kann auch für die Wellentiefe 39 der Wellentäler 34 gelten.

Gemäß Fig. 4 weist der Funktionsabschnitt 18 eine Funktionsdicke 40 auf, welche sich zwischen der Nassseite 26 und der Trockenseite 28 quer, insbesondere nicht parallel und senkrecht, vorzugsweise in einem Winkel von 30°, zur Stellachse 16 erstreckt. Die Funktionsdicke 40 ist im Bereich eines Wellenbergs 32 größer als die Verspanndicke 14 des Verspannabschnitts 12 ausgebildet. Die Funktionsdicke 40 ist im Bereich eines Wellentals kleiner als die Verspanndicke 14 des Verspannabschnitts 12 ausgebildet.

Die Wellenkontur 30, insbesondere die Wellenberge 32, sind derart ausgebildet, dass beim Zustellen des Druckstücks 22, bei welchem die Ventilmembran 10 in die Schließstellung bewegt wird, die Wellenberge 32 verformt werden. Dabei können die Wellenberge 32 komprimiert und/oder in die Wellentäler 34 gedrängt werden. Dies hat ferner einen positiven Einfluss auf die Spannungsverteilung in der Ventilmembran 10.

Gemäß Fig. 1 bis 4 grenzt an den Verspannabschnitt 12 ein Wellenberg 32 und an den Domabschnitt 24 ein Wellental 34 an. Demnach ist zwischen dem Verspannabschnitt 12 und dem dritten Wellenberg 32C ein Wellental vorgesehen.

Es ist denkbar, dass anhand einer Veränderung der Wellenhöhen 38 und Wellentiefen der Wellenkontur 30 der Verschleißzustand der Ventilmembran 10 erfassbar ist. Demnach können Daten über die Wellenhöhe 38 und die Wellentiefe erfasst werden und in Abhängigkeit dieser Daten der Verschleißzustand bestimmt werden.

Gemäß Fig. 1A können die Wellenberge 32 und die Wellentäler 34 kreisrund ausgebildet sein. Alternativ ist es denkbar, dass diese elliptisch ausgebildet sind. Entlang des Umfangs weist die Wellenkontur 30 einen konstanten Querschnitt auf.

In Fig. 5 ist das Membranventil 100 mit einer Ventilmembran 10 gezeigt, wobei die Ventilmembran 10 eine Wellenkontur 30 aufweist. In dem in Fig. 5 dargestellten Zustand liegt das Drückstück 22 an der Ventilmembran 10 zumindest im Wesentlichen vollflächig an. Dabei wird die im ungespannten Zustand vorhandene Wellenkontur 30 aufgrund ihrer elastischen Eigenschaften derart verformt, dass sich die Ventilmembran 10 im Kontaktbereich 36 an die Form des Druckstücks 22 anformt, insbesondere die Wellenkontur flach gedrückt wird. Dabei erstreckt sich der Kontaktbereich 36 der Ventilmembran 10 entlang einer Mittellinie der Wellenkontur 30. Die Mittellinie der Wellenkontur 30 ergibt sich dann, wenn die Wellenberge 32 und die Wellentäler 34 gemittelt werden. Dieses Phänomen tritt gerade bei der Bewegung des Druckstücks 22 in Richtung des Ventilkörpers 102 an der Wellenkontur 30 auf.

Das Druckstück 22 ist dabei derart ausgebildet und/oder angeordnet, dass das Drückstück 22 zunächst einen ersten Wellenberg 32A und anschließend wenigstens einen zweiten Wellenberg 32B, 32C, 32D, welcher gegenüber dem ersten Wellenberg 32A näher an der Stellachse 16 angeordnet ist, kontaktiert. Das Drückstück 22 weist an der Stellachse 16 vorzugsweise eine Aufnahme für den Domabschnitt 24 auf. Das Drückstück 22 weist vorzugsweise eine bogenförmige Kontaktkontur auf. Die Kontaktkontur des Druckstücks 22 ist vorzugsweise korrespondierend zur Mittellinie der Wellenkontur 30 ausgebildet. Die Kontaktkontur kann vorzugsweise korrespondierend zu einem Ventilsitz 106 ausgebildet sind. Die Ventilmembran 10, insbesondere der Kontaktbereich 36, ist derart elastisch ausgebildet, dass sich die Wellenkontur 30 wieder ausbildet, wenn das Druckstück 22 weg vom Ventilkörper 102 bewegt wird, insbesondere das Druckstück 22 die Ventilmembran 10 nicht mehr kontaktiert.

Das Membranventil 100 weist einen Ventilkörper 102 zum Aufnehmen der Ventilmembran 10 auf. Der Ventilkörper 102 weist eine Öffnung 104 auf, die zu einem feststehenden Ventilsitz 106, der zwei Fluidkammern 108 voneinander trennt, führt und von der Ventilmembran 10 verschlossen ist. Die Fluidkammern 108 führen vorzugsweise zu einem jeweils zugeordneten Fluidanschluss 110 des Ventilkörpers 102. Die Ventilmembran 10, insbesondere der Verspannabschnitt 12, ist zwischen dem Ventilkörper 102 und einem antriebseitigen Antriebskörper 112 verspannt und dichtet das Membranventil 100 nach außen ab. Der Antriebskörper 112 stützt sich am Ventilkörper 102 ab. Ein Antrieb 114 ist mit dem Antriebskörper 112 starr verbunden und bewegt eine Ventilstange 116 entlang der Stellachse 16. Das Drückstück 22 ist starr mit der Ventilstange 116 verbunden und bewegt das Druckstück 22 in Richtung des Ventilkörpers 102, um die Ventilmembran 10 auf den feststehenden Ventilsitz 106 zu drücken und damit die Dichtheit nach innen herzustellen.

## Patentansprüche

1. Ventilmembran (10) für ein Membranventil (100), die Ventilmembran (10) umfassend:
- einen einer gedachte Lotebene einer Stellachse (16) folgenden Verspannabschnitt (12),
- einen vom Verspannabschnitt (12) umgebenden Funktionsabschnitt (18) mit einer Trockenseite (28) und einer Nassseite (26);
wobei der Funktionsabschnitt (18) an der Trockenseite (28) einen Kontaktbereich (36) zum Kontaktieren eines antriebsseitigen Druckstücks (22) aufweist,
wobei der Funktionsabschnitt (18) eine Wellenkontur (30) mit wenigstens einem um die Stellachse (16) zumindest abschnittsweise umlaufenden, insbesondere vollständig umlaufenden, Wellenberg (32) und/oder mit wenigstens einem um die Stellachse (16) zumindest abschnittsweise umlaufenden, insbesondere vollständig umlaufenden, Wellental (34) umfasst, und
wobei der wenigstens eine Wellenberg (32) und/oder das wenigstens eine Wellental (34) durch den Kontaktbereich (36) verläuft.

2. Ventilmembran (10) nach Anspruch 1, wobei die Wellenkontur (30) wenigstens zwei oder drei um die Stellachse (16) umlaufende Wellenberge (32) und/oder wenigstens zwei oder drei um die Stellachse (16) umlaufende Wellentäler (34) aufweist.

3. Ventilmembran (10) nach einem der Ansprüche 1 oder 2, wobei der Funktionsabschnitt (18) einen Walkabschnitt (20) und einem vom Walkabschnitt (20) umgebenden Domabschnitt (24) mit abschnittsweise darin angeordnetem Membranpin (25) aufweist, und wobei die Wellenkontur (30) im Walkabschnitt (20) vorgesehen ist.

4. Ventilmembran (10) nach einem der Ansprüche 1, 2 oder 3, wobei an den Domabschnitt (24) ein Wellenberg (32) oder ein Wellental (34) der Wellenkontur (30) angrenzt.

5. Ventilmembran (10) nach einem der vorherigen Ansprüche, wobei an den Verspannabschnitt (12) ein Wellental (34) oder ein Wellenberg (32) der Wellenkontur (30) angrenzt.

6. Ventilmembran (10) nach einem der vorherigen Ansprüche, wobei mehrere Wellenberge (32) und/oder mehrere Wellentäler (34) vorgesehen sind, wobei jeder Wellenberg (32) eine Wellenhöhe (38) und/oder jedes Wellental (34) eine Wellentiefe (39) aufweist, und wobei die Wellenhöhe (38) der Wellenberge (32) und/oder die Wellentiefe (39) der Wellentäler (34) unterschiedlich sind, insbesondere von der Stellachse (16) zum Verspannabschnitt (12) hin zu- und/oder abnehmen.

7. Ventilmembran (10) nach einem der vorherigen Ansprüche, wobei der wenigstens eine Wellenberg (32) und/oder das wenigstens eine Wellental (34) kreisrund oder ellipsenförmig ausgebildet ist.

8. Ventilmembran (10) nach einem der vorherigen Ansprüche, wobei der wenigstens eine Wellenberg (32) eine Kontaktfläche zum Kontaktieren des antriebsseitigen Druckstücks (22) bildet.

9. Ventilmembran (10) nach einem der Ansprüche 3 bis 8, wobei der Kontaktbereich (36) sich zwischen dem Dombereich und dem Verspannabschnitt (12) erstreckt.

10. Ventilmembran (10) nach einem der vorherigen Ansprüche, wobei der Kontaktbereich (36) parallel zu einem an der Nassseite (26) vorgesehenen Dichtabschnitt der Ventilmembran (10) verläuft.

11. Ventilmembran (10) nach einem der vorherigen Ansprüche, wobei der Verspannabschnitt (12) eine parallel zur Stellachse (16) verlaufende Verspanndicke (14) aufweist und der Funktionsabschnitt (18) eine quer zur Stellachse (16) verlaufende Funktionsdicke (40) aufweist, wobei die Funktionsdicke (40) an wenigstens einem Wellenberg (32) größer als die Verspanndicke (14) ist und/oder wobei die Funktionsdicke (40) an wenigstens einem Wellental (34) kleiner als die Verspanndicke (14) ist.

12. Membranventil (100) mit einer Ventilmembran (10) nach einem der vorherigen Ansprüche, das Membranventil (100) umfassend:
- ein Ventilkörper (102) zum Aufnehmen der Ventilmembran (10);
- ein Druckstück (22) zum Verlagern der Ventilmembran (10),
wobei das Druckstück (22) und die Ventilmembran (10) derart angeordnet sind, dass das Druckstück (22) beim Kontaktieren der Ventilmembran (10) den Kontaktbereich (36), insbesondere den wenigstens einen Wellenberg (32) der Wellenkontur (30), kontaktiert.

13. Membranventil (100) nach Anspruch 12, wobei mehrere Wellenberge (32) vorgesehen sind, und wobei das Druckstück (22) und die Ventilmembran (10) derart angeordnet sind, dass beim Bewegen des Druckstücks (22) in Richtung des Ventilkörper (102), insbesondere bei einem Schließvorgang des Membranventils (100), das Druckstück (22) den Kontakt zu den Wellenbergen (32) in Bezug zur Stellachse (16) von radial innen nach radial außen nacheinander herstellt und/oder dass beim Bewegen des Druckstücks (22) in Richtung des Ventilkörper (102), insbesondere beim Schließvorgang des Membranventils (100), das Druckstück (22) die Wellenberge (32) in Bezug zur Stellachse (16) von radial innen nach radial außen nacheinander komprimiert.

14. Verfahren zum Betreiben eines Membranventils (100) nach einem der Ansprüche 12 oder 13 mit einer Ventilmembran (10) nach einem der Ansprüche 1 bis 11, wobei beim Zustellen des Druckstücks (22) das Drückstück (22) zunächst einen ersten Wellenberg (32A) und dann wenigstens einen zweiten Wellenberg (32B, 32C, 32D) der Wellenkontur (30) kontaktiert und/oder komprimiert, wobei der erste Wellenberg (32A) in Bezug zur Stellachse (16) radial innen zum wenigstens einen zweiten Wellenberg (32B, 32C, 32D) angeordnet ist.
